## Europäisches Patentamt

## European Patent Office

## Office européen des brevets

(19)

(11) Veröffentlichungsnummer: **0 292 884**
**B1**

(12)

# EUROPÄISCHE PATENTSCHRIFT

(45) Veröffentlichungstag der Patentschrift:
**07.11.90**

(51) Int. Cl.⁵: **B29B 7/76**

(21) Anmeldenummer: **88108078.2**

(22) Anmeldetag: **20.05.88**

(54) Vorrichtung zum Mischen von Mehrkomponenten-Kunststoffen, insbesondere Polyurethan.

(30) Priorität: **27.05.87 DE 8707619 U**

(43) Veröffentlichungstag der Anmeldung:
**30.11.88 Patentblatt 88/48**

(45) Bekanntmachung des Hinweises auf die Patenterteilung:
**07.11.90 Patentblatt 90/45**

(84) Benannte Vertragsstaaten:
**DE FR GB IT**

(56) Entgegenhaltungen:
**KEIN**

(73) Patentinhaber: **Elastogran GmbH, Postfach 1140,
D-2844 Lemförde(DE)**

(72) Erfinder: **Knelfel, Volker, Scharfreuterweg 3, D-8170 Bad
Toelz(DE)**

(74) Vertreter: **Springer, Hans Jörg, Dr. et al, BASF
Aktiengesellschaft Patentabteilung
Carl-Bosch-Strasse 38, D-6700 Ludwigshafen(DE)**

## Beschreibung

Die Neuerung betrifft eine Vorrichtung nach dem Oberbegriff des Schutzanspruchs 1.

Derartige Vorrichtungen, die in den unterschiedlichsten Ausgestaltungen bekannt sind, weisen einen Mischkopf auf, dem mindestens zwei miteinander zu vermischenden Komponenten durch Dosierpumpen zugefördert werden. In dem Mischkopf treffen die Komponenten aufeinander und reagieren chemisch miteinander, um vor dem Ausreagieren beispielsweise in eine Form gefüllt zu werden, und dort ggf. unter Aufschäumen einen Formling zu bilden.

Die Dosierpumpen werden mit Hilfe einer Stellvorrichtung, die auch als Servostellgerät bezeichnet werden kann, stufenlos dadurch verstellt, daß die Stellvorrichtung auf die Stellwelle einwirkt. Die Dosierpumpen sind so ausgeführt, daß ein Anschluß auf beiden Seiten, d.h. ein Rechts- und Linksanschluß möglich ist, um einen universellen Einsatz zu gewährleisten. Aus diesem Grunde tritt die Stellwelle dann an beiden Seiten aus der Dosierpumpe aus. Wenn die Dosierpumpe der Dosierung von Isocyanat dient, so treten dadurch Probleme auf, daß das Isocyanat in Verbindung mit der Luftfeuchtigkeit kristallisiert. Diese Kristalle bewirken an den Dichtungen bei der austretenden Stellwelle einen hohen Verschleiß, der zu einer entsprechenden Leckage führt.

Bei den bekannten Vorrichtungen befindet sich zwischen der Dosierpumpe und der Verstellvorrichtung eine sog. Laterne, so daß hier die Luft und damit die in ihr befindliche Feuchtigkeit freien Zugang hat. Entsprechendes gilt auf der Seite der frei austretenden Stellwelle.

Der Neuerung liegt nun die Aufgabe zugrunde, eine Vorrichtung der eingangs genannten Art zu schaffen, bei der eine Kristallbildung, insbesondere bei Isocyanat, und damit ein durch Kristalle bedingter Verschleiß der Wellendichtungen, verhindert wird.

Diese Aufgabe wird grundsätzlich durch den kennzeichnenden Teil des Schutzanspruches 1 gelöst.

Dadurch, daß die Welle zwischen Dosierpumpe und Verstellvorrichtung in einem Behälter angeordnet ist, der mit einer Sperrflüssigkeit, beispielsweise mit Dioctylphthalat (DOP), gefüllt ist, kann die Luft und damit die Luftfeuchtigkeit, nicht mehr zutreten und sich mit der austretenden Komponentenflüssigkeit, insbesondere dem Isocyanat, verbinden. Es entstehen also auch keine Kristalle, die für einen schnellen und unerwünschten Verschleiß der Dichtungen sorgen.

In vorteilhafter Weise ist auch der auf der anderen Seite austretende Wellenstumpf in einem entsprechenden Behälter angeordnet (Schutzanspruch 2).

Weitere vorteilhafte Ausgestaltungen sind Gegenstand der Ansprüche 3 und 4.

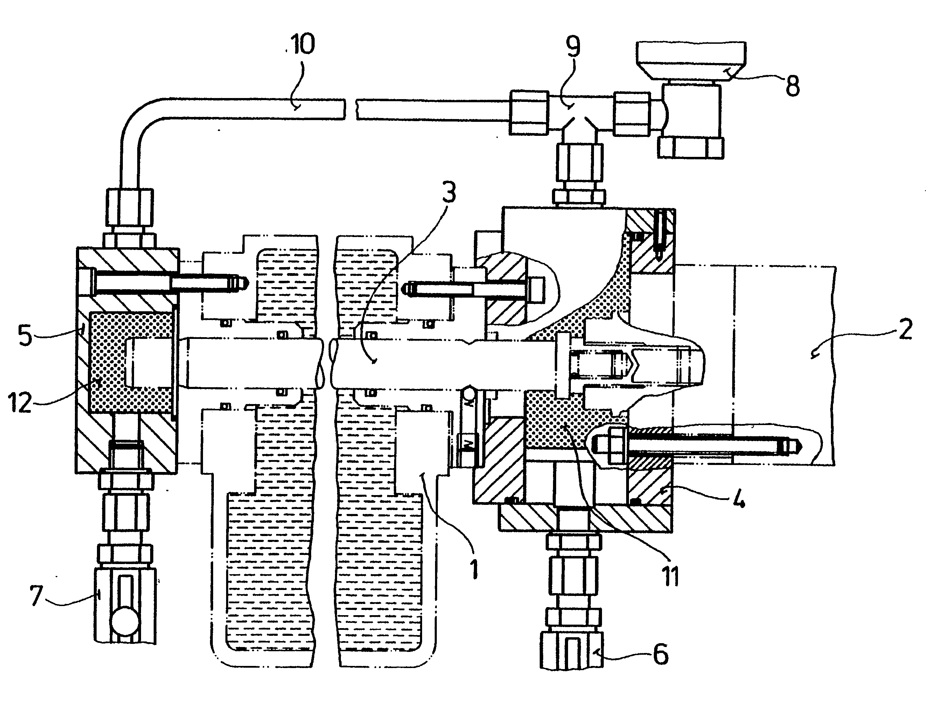

Im folgenden wird die Neuerung unter Hinweis auf die Zeichnung anhand eines Ausführungsspieles näher erläutert.

In der einzigen Figur ist der für die Neuerung wesentliche Teil der Vorrichtung dargestellt. Es ist eine Dosierpumpe 1 gezeigt, deren Stellwelle 3 auf beiden Seiten austritt. Auf der einen Seite ist eine Stellvorrichtung 2 angedeutet, die mit der dort austretenden Welle verbunden ist.

Zwischen der Dosierpumpe 1 und der Stellvorrichtung 2 ist ein Behälter 4 vorgesehen. Auf der anderen Seite ist ein Behälter 5 angeflanscht, der den dort austretenden Wellenstumpf aufnimmt.

Ein Vorratsbehälter 8 ist mit Sperrflüssigkeit gefüllt und über entsprechende Leitungen 9 und 10 mit dem Innenraum 11 des Behälters 4 und dem Innenraum·12 des Behälters 5 verbunden. Von hier aus gelangt die Sperrflüssigkeit in die Innenräume 11 und 12 der Behälter 4 und 5. Auf der Unterseite der Behälter 4 und 5 befindet sich je ein Ablaßhahn 6 und 7 für die Sperrflüssigkeit, so daß verschmutzte Sperrflüssigkeit abgelassen werden kann und ein Durchspülen ermöglicht wird.

Es ist leichter erkennbar, daß die gesamte Stellwelle hermetisch gegen die Umgebung abgedichtet ist, so daß Luftfeuchtigkeit keinen Zugang mehr zu der Stellwelle hat, so daß auch keine Verbindung mit der Leckflüssigkeit möglich ist. Besonders kritisch ist die Verbindung der Luftfeuchtigkeit für die Isocyanatseite der Vorrichtung nach der Neuerung, da Isocyanat bekanntlich sehr leicht und unter Kristallbildung mit Wasser reagiert. Durch die Vermeidung der Kristallbildung haben die Dichtungen eine sehr viel höhere Standzeit.

Als Sperrflüssigkeit wird üblicherweise Dioctylphthalat (DOP) eingesetzt. Dieses ist unter dem Handelsnahmen "Palatinol" der Firma BASF bzw. "Mesamoll" der Fa. Bayer im Handel.

### Patentansprüche

1. Vorrichtung zum Mischen von Mehrkomponenten-Kunststoffen, insbesondere Polyurethan, mit einem Mischkopf und mit einer Dosierpumpe (1) für jede Komponente, deren Stellwelle (3) mit einer Stellvorrichtung (2) verbunden ist, dadurch gekennzeichnet, daß insbesondere zwischen der Dosierpumpe (1) für Isocyanat und der zugehörigen Stellvorrichtung (2) ein die Stellwelle (3) aufnehmender Behälter (4) angeordnet ist, der mit einer Sperrflüssigkeit gefüllt ist.

2. Vorrichtung nach Anspruch 1, dadurch gekennzeichnet, daß auf der der Stellvorrichtung (2) gegenüberliegenden Seite der Dosierpumpe (1) ein zweiter, mit der Sperrflüssigkeit gefüllter Behälter (5) zur Aufnahme des dort austretenden Wellenstumpfes vorgesehen ist.

3. Vorrichtung nach Anspruch 1 oder 2, dadurch gekennzeichnet, daß zur Versorgung des oder der Behälter (4,5) mit Sperrflüssigkeit ein mit diesen verbundener Vorratsbehälter (8) vorgesehen ist.

4. Vorrichtung nach einem oder mehreren der vorstehenden Ansprüche, dadurch gekennzeichnet, daß der oder die Behälter (4,5) Ablaßhähne (6,7) für die Sperrflüssigkeit aufweisen.

## Claims

1. Apparatus for mixing multicomponent plastics, in particular polyurethane, comprising a mixing head and for each component a metering pump (1) whose setting shaft (3) connects to a control mechanism (2), wherein there is arranged in particular between the metering pump (1) for isocyanate and the associated control mechanism (2) a vessel (4) which receives the setting shaft (3) and is filled with a sealing fluid.

2. Apparatus as claimed in claim 1, wherein that side of the metering pump (1) which is opposite the control mechanism (2) is provided with a second sealing fluid vessel (5) for receiving the shaft end protruding there.

3. Apparatus as claimed in claim 1 or 2, wherein the vessel(s) (4, 5) are supplied with sealing fluid from a reservoir vessel (8) connected with them.

4. Apparatus as claimed in one or more of the preceding claims, wherein the vessel(s) (4, 5) possesses or possess drain cocks (6, 7) for the sealing fluid.

## Revendications

1. Appareil de mélange de matières plastiques multicomposants, en particulier de polyuréthane, muni d'une tête mélangeuse et d'une pompe doseuse (1) pour chaque composant, dont l'arbre de réglage (3) est relié à un dispositif de réglage, caractérisé par le fait que, en particulier entre la pompe doseuse (1) pour l'isocyanate et le dispositif de réglage (2) associé, est disposé un réservoir (4) recevant l'arbre de réglage (3) et qui est rempli d'un liquide d'isolement.

2. Appareil selon la revendication 1, caractérisé par le fait que du côté de la pompe doseuse (1) opposé au dispositif de réglage, est prévu un deuxième réservoir (5) rempli du liquide d'isolement pour recevoir le bout d'arbre qui en sort.

3. Appareil selon la revendication 1 ou 2, caractérisé par le fait que, pour approvisionner le ou les réservoirs (4, 5) en liquide d'isolement, est prévu un réservoir de réserve (8) relié à ceux-ci.

4. Appareil selon l'une ou plusieurs des revendications précédentes, caractérisé par le fait que le ou les réservoirs (4, 5) possèdent des robinets de décharge (6, 7) pour le liquide d'isolement.

EP 0 292 884 B1